(19) Europäisches Patentamt
European Patent Office
Office européen des brevets

(11) **EP 4 166 993 B1**

(12) **EUROPEAN PATENT SPECIFICATION**

(45) Date of publication and mention
of the grant of the patent:
**07.08.2024   Bulletin 2024/32**

(21) Application number: **21203157.9**

(22) Date of filing: **18.10.2021**

(51) International Patent Classification (IPC):
***G01V 8/20*** *(2006.01)*

(52) Cooperative Patent Classification (CPC):
**G01V 8/20**

(54) **SENSOR FOR PROVIDING A SURVEILLANCE AREA**

SENSOR ZUR BEREITSTELLUNG EINES ÜBERWACHUNGSBEREICHS

CAPTEUR POUR LA PROVISION D'UNE RÉGION DE SURVEILLANCE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**19.04.2023   Bulletin 2023/16**

(73) Proprietor: **Pepperl+Fuchs SE
68307 Mannheim (DE)**

(72) Inventor: **ASGHAR, Sayed Zeeshan
12277 Berlin (DE)**

(74) Representative: **Fischer, Uwe
Patentanwalt
Moritzstraße 22
13597 Berlin (DE)**

(56) References cited:
**EP-B1- 2 012 144     US-A- 4 650 990
US-A- 4 847 488     US-A1- 2021 011 166**

**Description**

Background of the invention

A sensor comprising a plurality of radiation emitters for generating a light curtain is described for instance in Chinese Patent Application CN 203877712 U.

European patent application EP 2 012 144 B1 discloses a light curtain where surveillance channels use individual orthogonal pulse sequences.

US patent 4,650,990 discloses a light curtain where emitters of surveillance channels are activated sequentially.

US patent application publication US 2021/0011166 A1 discloses a LIDAR system for three-dimensional mapping of objects.

The accuracy of surveillance channels of sensors such as light curtain devices may be impaired by interference of ambient light or radiation from other sources. For instance, if an object interrupts one of the surveillance channels and should therefore be detected, but the corresponding detector of the surveillance channel is illuminated by ambient light or light of another source, the object may remain undetected.

Objective of the present invention

An objective of the present invention is to propose a sensor and a light curtain device which are optimized with regard to above described interference problems.

A further objective of the present invention is to provide an improved method of surveiling an area.

Brief summary of the invention

An embodiment of the present invention relates to a sensor according to claim 1.

An advantage of the above exemplary embodiment is that the warning signal may indicate interference problems. For instance, if the signal path between the second radiation emitter and the second detector is interrupted, the second detector should not generate a detection signal. However, in case of severe interference, radiation from other sources such as ambient light might lead to a detection signal nonetheless. In the latter scenario, an object that interrupts the signal path and should therefore be detected might remain undetected. By checking whether received signals contain inverse information, interference can be detected.

"Inverse" information means that the sub-channels convey logically opposite information. For instance, when the first sub-channel conveys the information "ACTIVE", the second sub-channel conveys the information "INACTIVE". The information can be a binary information represented by a single bit: For instance, if the first sub-channel conveys the information "1", the second sub-channel may convey the inverse information "0", and vice versa. For instance, one surveillance channel may convey the information "RED" and "NOT RED", whereas another surveillance channel may convey the information "GREEN" and "NOT GREEN".

The evaluation unit preferably generates a clearance signal if the first detector receives the first stream of information, the second detector receives the second stream of information, and the detected first stream and the detected second stream are inverse or sufficiently inverse according to said predefined deviation limit.

The sensor is preferably a light curtain sensor.

The sensor preferably provides a plurality of surveillance channels.

The surveillance channel or channels are preferably free-beam surveillance channels. The streams of information are preferably transmitted via free-space beam propagation.

In case of more than one surveillance channel, each of said surveillance channels preferably comprises a first and a second sub-channel, wherein the first sub-channel of each surveillance channel is formed by a first radiation emitter and an individually assigned first detector and wherein the second sub-channel of each surveillance channel is formed by a second radiation emitter and an individually assigned second detector.

The emitter control unit is preferably configured to control the radiation emitters such that each radiation emitter inputs a first stream of information into its allocated sub-channel and each second radiation emitter inputs a second stream of information into its allocated sub-channel, wherein the first stream of each surveillance channel is inverse to the second stream of the same surveillance channel.

Each of the surveillance channels preferably defines a surveillance segment of a light curtain generated by the light curtain sensor during operation.

The evaluation unit preferably generates a clearance signal if the first and second detector of all surveillance channels detect pairwise inverse streams.

The evaluation unit preferably generates an object detection signal if at least one stream of at least one of said surveillance channels is interrupted.

The radiation generated by the first radiation emitter of each surveillance channel has preferably a first polarization.

The radiation generated by the second radiation emitter of each surveillance channel preferably has a second polarization.

The first polarization is preferably angled, for instance vertically oriented, with respect to the second polarization, the differently oriented polarizations allowing the separation of the sub-channels at each surveillance channel's end.

The radiation generated by the first radiation emitter of each surveillance channel preferably has a first wavelength or first wavelength range.

The radiation generated by the second radiation emitter of each surveillance channel preferably has a second wavelength or second wavelength range.

The first wavelength or first wavelength range preferably differs from the second wavelength or second wavelength range, the different wavelengths or wavelength ranges allowing the separation of the sub-channels at each surveillance channel's end.

A further embodiment of the invention relates to a method according to claim 13.

Preferably a light curtain is generated by providing a plurality of surveillance channels.

A clearance signal may be generated if the first and second detector of all surveillance channels detect pairwise inverse streams.

All features as described above in connection with the sensor or light curtain device can also be included in said method of surveiling an area. In other words, all features listed above and in the dependent claims that refer to the sensor, may also be considered as disclosed subject matter regarding the method.

Furthermore, all features as described above in connection with the method of surveiling an area can also be included in said sensor or light curtain device. In other words, all features listed above and in the dependent claims that refer to the method, may also be considered as disclosed subject matter regarding the sensor or light curtain device.

Brief description of the drawings

In order that the manner, in which the above-recited and other advantages of the invention are obtained, will be readily understood, a more particular description of the invention briefly described above will be rendered by reference to specific embodiments thereof, which are illustrated in the appended figures. Understanding that these figures depict only typical embodiments of the invention and are therefore not to be considered limiting of its scope, the invention will be described and explained with additional specificity and detail by the use of the accompanying drawings in which

Figure 1      illustrates an exemplary embodiment of a sensor according to the present invention,

Figure 2      shows an exemplary embodiment of a transmitter device that can be incorporated in the sensor of Figure 1,

Figure 3      shows an exemplary code that can be sent to a receiver device of the sensor of Figure 3,

Figure 4      shows an exemplary embodiment of a receiver device that can be incorporated in the sensor of Figure 1,

Figure 5      shows exemplary signals that may be received by the receiver device of Figure 4,

Figure 6      shows further embodiments of components suitable for a receiver device of the sensor of Figure 1,

Figure 7      depicts a second exemplary embodiment of a sensor according to the present invention,

Figure 8      depicts a third exemplary embodiment of a sensor according to the present invention, and

Fig. 9-10     illustrate signals during operation of the embodiment of Figure 8.

Detailed description of the preferred embodiments

The preferred embodiments of the present invention will be best understood by reference to the drawings, wherein identical or comparable parts are designated by the same reference signs throughout.

It will be readily understood that the parameters of the embodiments of the present invention, as generally described herein, could vary in a wide range. Thus, the following more detailed description of exemplary embodiments of the present invention, is not intended to limit the scope of the invention but is merely representative of presently preferred embodiments of the invention.

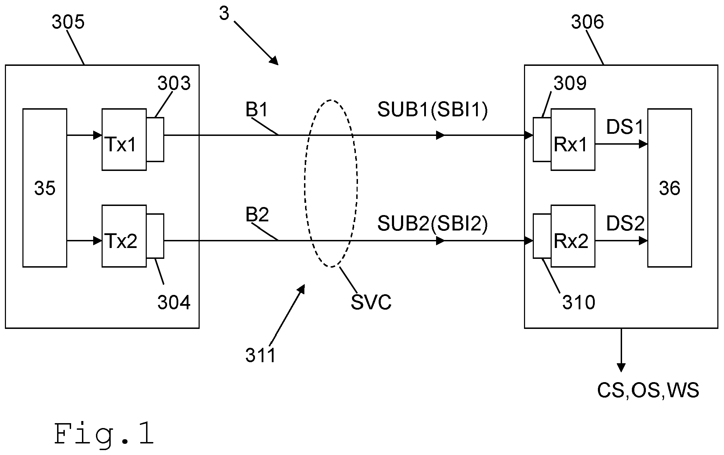

Figure 1 depicts a first exemplary embodiment of a sensor 3 according to the present invention. The sensor 3 of Figure 1 is an object detection sensor that provides a single free-beam surveillance channel SVC. As will be explained in detail further below, the sensor 3 is configured to generate a clearance signal CS if the free-beam surveillance channel SVC is uninterrupted and undisturbed. If the free-beam surveillance channel SVC is interrupted, an object detection signal OS is generated. If the free-beam surveillance channel SVC is uninterrupted, but disturbed a warning signal WS is generated.

The sensor 3 comprises a transmitter device 305 and a receiver device 306.

The transmitter device 305 comprises a first radiation emitter Tx1 and a second radiation emitter Tx2 which both are controlled by an emitter control unit 35 of the transmitter device 305. The radiation generated by the radiation emitters may be visible light or invisible light (e. g. infrared or ultraviolet light) or any other electromagnetic radiation.

The emitter control unit 35 controls the first radiation emitter Tx1 such that the first radiation emitter Tx1 generates a first radiation beam B1 that conveys a first stream SBI1 of information ("first stream of data"). The emitter control unit 35 controls the second radiation emitter Tx2 such that the second radiation emitter Tx2 generates a second radiation beam B2 that conveys a second stream SBI2 of information ("second stream of data").

The first beam B1 and its allocated first stream SBI1 of information as well as the second beam B2 and its allocated second stream SBI2 of information are transmitted towards the reveiver unit 306 via free-space beam propagation.

The first stream SBI1 of information and the second stream SBI2 of information are inverse. In this context, "inverse" means that the sub-channels SUB1 and SUB2 convey logically opposite information. For instance, when the first sub-channel SUB1 conveys the information "ACTIVE", the second sub-channel SUB2 conveys the information "INACTIVE". An information can be transmitted via a single bit. Alternatively, the information and the opposite (inverse) information can be transmitted via pre-defined sequences of bits that differ from one another.

The receiver device 306 comprises a first detector Rx1 and a second detector Rx2.

The first radiation emitter Tx1 is individually assigned to the first detector Rx1 such that the first radiation emitter Tx1 and the first detector Rx1 form a first sub-channel SUB1 of the surveillance channel SVC.

The second radiation emitter Tx2 is individually assigned to the second detector Rx2 such that the second radiation emitter Tx2 and the second detector Rx2 form a second sub-channel SUB2 of the surveillance channel SVC.

An evaluation unit 36 of the receiver device 306 is configured to evaluate detection signals DS1 and DS2 of the detectors Rx1 and Rx2.

The evaluation unit 36 generates the warning signal WS if the detection signal DS1 of the first detector Rx1 is not inverse or not sufficiently inverse - according to a predefined deviation limit - with respect to the detection signal DS2 of the second detector Rx2. The predefined deviation limit may for instance require that the percentage of received pairs of information (e.g. bits) that are not inverse (relatively with respect to one another) must be lower than a given maximum limit (e.g. 1%). Alternatively or additionally, the predefined deviation limit may require that the percentage of received pairs of information (e.g. bits) that are inverse must exceed a given minimum limit (e.g. 99%).

The evaluation unit 36 generates a clearance signal CS if the free-beam surveillance channel SVC is both uninterrupted and undisturbed. The surveillance channel SVC may be deemed uninterrupted if both detectors Rx1 and Rx2 receive radiation and generate detection signals that have a sufficient signal strength (e.g. minimal amplitude). The surveillance channel SVC may be deemed undisturbed if the detections signals DS1 and DS2 and the streams SBI1 and SBI2 of information contained therein are inverse or at least sufficiently inverse according to said predefined deviation limit.

The evaluation unit 36 generates the object detection signal OS if one or both of the sub-channels SUB1 and/or SUB2 of the free-beam surveillance channel SVC are interrupted. The sub-channels SUB1 and SUB2 may be deemed interrupted if the detectors Rx1 and Rx2 do not generate a sufficient detection signal, e.g. do not provide a detection signal having a required minimum amplitude.

In the exemplary embodiment of Figure 1, the radiation beams B1 and B2 emitted by the transmitter device 305 travel through a medium 311, where undesired interference may be added in terms of ambient light as well as interference of other devices operating nearby.

In order to cope with such interference, the transmitter device 305 may comprise polarization filters 303 and 304 that are placed at the output ports of the radiation emitters Tx1 and Tx2. The polarization filters 303 and 304 are preferably oriented in such a way that the first beam B1 only comprises light that is polarized in horizontal direction (H-polarization) and the second beam B2 only comprises light that is polarized in vertical direction (V-polarization).

Correspondingly, the receiver device 306 comprises polarization filters 309 and 310 that are placed at the input ports of the detectors Rx1 and Rx2. The polarization filters 309 and 310 are preferably oriented in such a way that the first detector Rx1 only receives light that is polarized in horizontal direction (H-polarization) and the second detector Rx2 only receives light that is polarized in vertical direction (V-polarization). Such orientations of the polarization filters 303, 304, 309 and 310 allow conveying polar signals (+1/-1) through an optical system which per se is not capable of conveying negative polarities (we can only send 0,+1 through optical systems).

Additionally or alternatively, the streams SBI1 and SBI2 of information may be sent through frequency shift keying, whereby the radiation beams B1 and B2 emitted by the radiation emitters Tx1 and Tx2 have vastly different frequencies, e.g. emit red and infra-red light. Appropriate optical filters may be applied to the detectors Rx1 and Rx2 to suppress cross talk between the two sub-channels SUB1 and SUB2.

Time domain multiplexing may also (or alternatively) be used to reduce the influence of ambient light and/or interference.

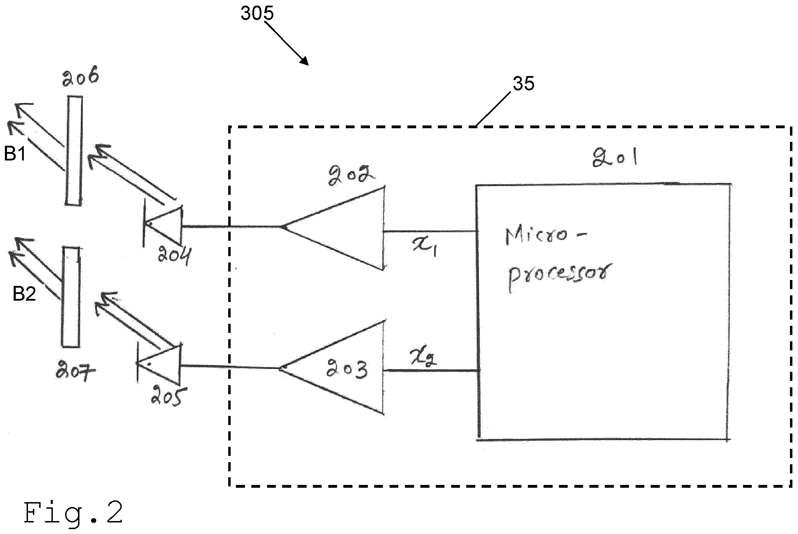

Figure 2 shows an exemplary embodiment of a transmitter device 305 that can be incorporated in the sensor 3 of Figure 1. The transmitter device 305 comprises a microprocessor 201 that may be used to generate two sequences x1 and x2, in such a way that only one sequence has a "1" or "ON" at a time (and the other has a "0" or "OFF" at the same time). The two digital sequences are passed through amplifiers 202 and 203 so that we have enough power for light emitting diodes (LEDs), as shown by 204 and 205, to illuminate an area of interest. 206 represents a horizontal polarizing filter, while 207 represents a vertical polarization filter. The main idea is that the sequence x1, converted to light signal will have horizontal polarization while the other sequence signal x2 will have vertical polarization.

In Figure 2, the microprocessor 201 and the amplifiers 202 and 203 form the emitter control unit 35 of Figure 1, and the diodes 204 and 205 form the radiation emitters Tx1 and Tx2 of Figure 1.

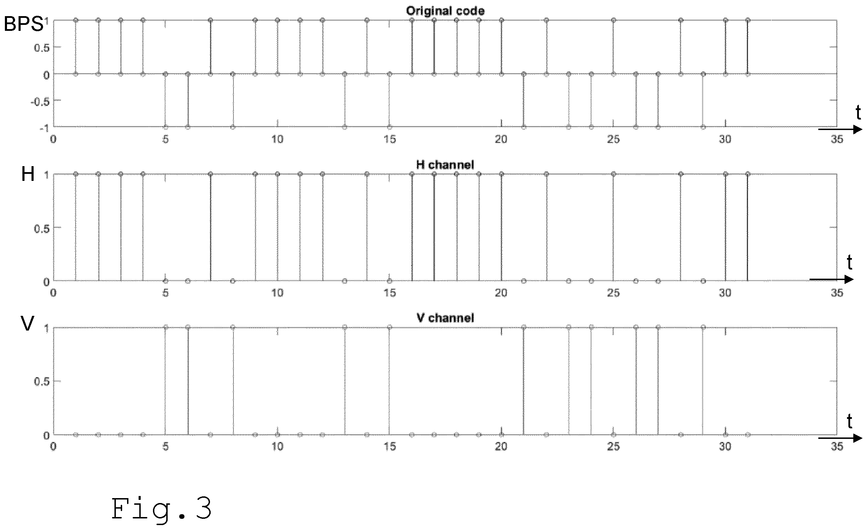

Figure 3 shows a potential code that can be sent over to the receiver device 306, versus time t. As shown in Figure 3, a bipolar signal BPS is converted to two unipolar signals, labeled H and V. These two unipolar signals H and V form the signals x1 and x2, shown in Figure 2. The unipolar signal H may be optically transmitted via the horizontally polarized beam B1 in Figure 1, and the unipolar signal V may be optically transmitted via the vertically polarized beam B2 in Figure 1.

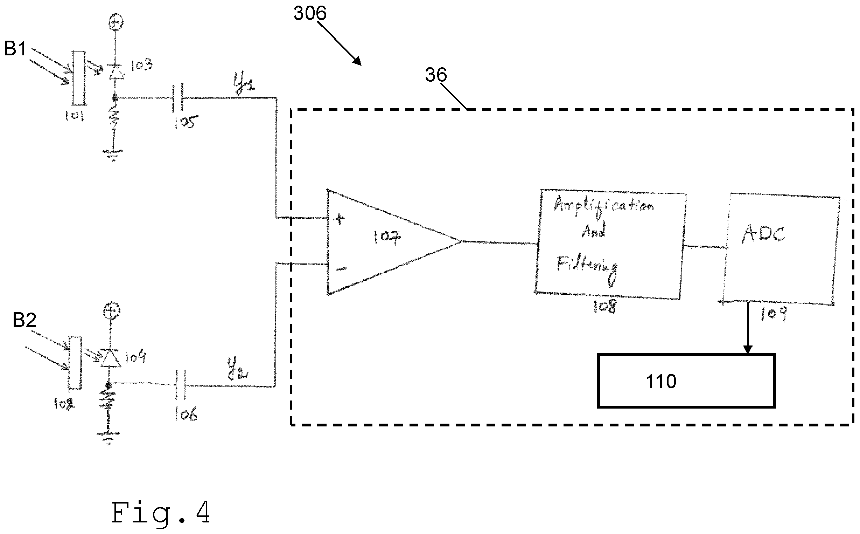

Figure 4 shows an exemplary embodiment of a receiver device 306 that can be incorporated in the sensor 3 of Figure 1. The received radiation beams B1 and B2 are split into horizontal and vertical polarized components, by help of a horizontal polarizing filter 101 and a vertical polarizing filter 102. The focused light (lens not shown for simplicity) then falls on to a photodiode 103, passing through polarization filter 101, to generate a signal y1. In a similar way, we get a signal y2, by passing the light through a vertical polarization filter 102, subsequently falling on to a photodiode 104.

In Figure 4, a differential amplifier 107, an amplification and filtering block 108, an analog to digital converter 109 and a microprocessor 110 form the evaluation unit 36 of Figure 1. The diodes 103 and 104 form the radiation detectors Rx1 and Rx2 of Figure 1.

Using an additive model for ambient noise $\eta a$ and adding in the contribution of the device noise $\eta t$, we can write the received signals yi in the following manner:

$$yi = \alpha xi + 0.5\eta a + \eta ti \text{ for } i = 1, 2 \quad (1)$$

Here we assume that the ambient light is not polarized, which is a reasonable assumption for most of the ambient light sources. For polarized light, the equation can be modified as follows:

$$yi = \alpha xi + \beta i\eta a + \eta ti \text{ for } i = 1, 2 \quad (2)$$

where, $\beta 1 = 1 - \beta 2$, $\beta 2 \in (0, 1)$.

The worst case scenario will happen when the ambient light is 100% polarized, then our circuit (sensor 3) will not provide any benefit as compared to any other circuit (sensor) which is not utilizing the methods explained above . Any value of $\beta 2$, apart for the extremities of 0 and 1, will offer some advantage in terms of ambient light cancellation effects of our sensor 3, with the best results achieved when the ambient light is completely unpolarized ($\beta 2 = 0.5$). These arguments also stand true for other interfering sensors as the nature of the two interferences is very similar. The main difference however is the pulsing behavior of the interference as compared to the ambient light, which is incessant and slowly varying.

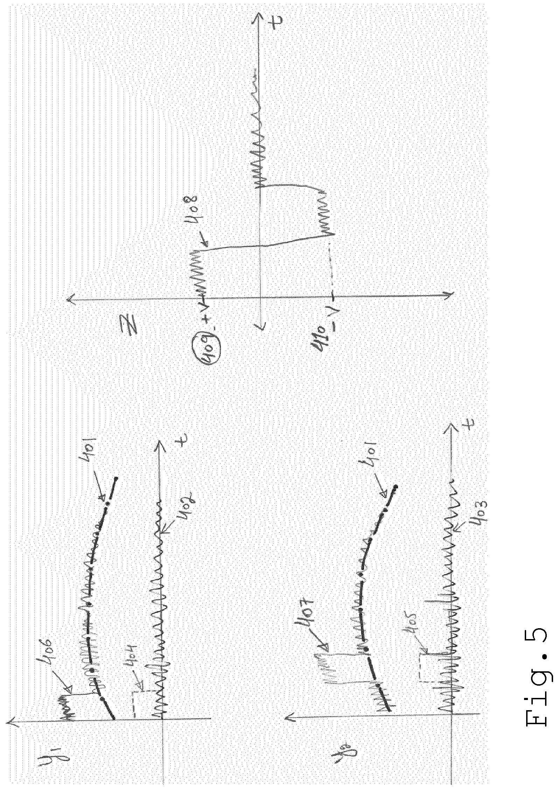

The received signals y1 and y2 are shown in Figure 5 for one example scenario where we send "1 0 0 0..." on H channel and "0 1 0 0..." on V-channel. There is a phase offset of one period between the signal of the two channels. 401 represents ambient light, with $\beta 2 \approx 0.5$ in above equation (2).

The thermal noise for each receiver 402 and 403 will be different but with comparable power, given by $\sigma^2 ti$.

406 and 407 represent the combined signals, given by y1 and y2 respectively. The output of the amplifier 107 is given by

$$z = y1 - y2$$

and shown as 408 for our specific example. The received voltage levels +V (409) and -V (410), in practice will be too small and will need to be amplified and passed through a high pass filter to reduce the thermal noise. This is achieved by the amplification and filtering block 108. In the end, the signal is sampled through analog to digital converter 109.

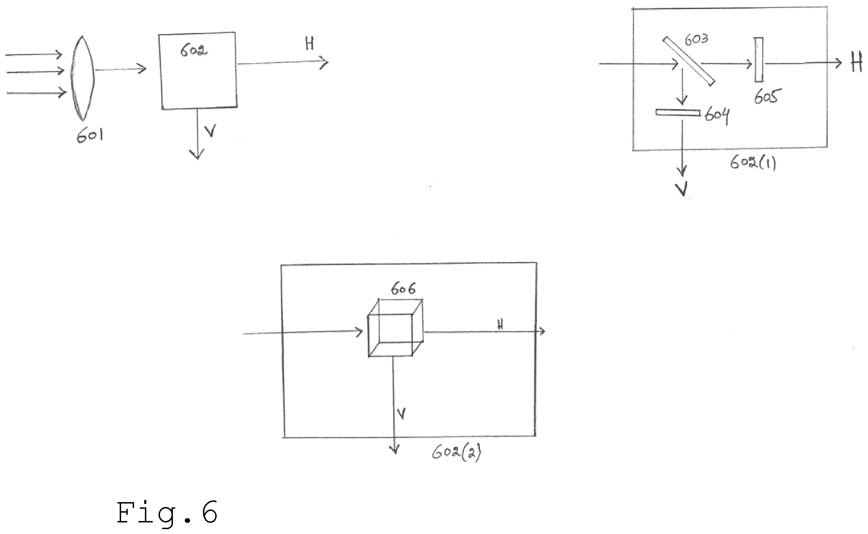

In one realization, as shown in Figure 6, the receiver device 306 of Figures 1 and 4 may have a lens 601 that focuses the incident light on a beam-splitter 602 and the output H and V channels are processed as depicted in Figure 6. A beam-splitter mechanism can be realized using a partial mirror 603, a horizontal polarization filter 605 and a vertical polarization filter 604 as depicted by 602(1). It can also be realized through a polarizing cube beam-splitter 606, as shown in 602(2).

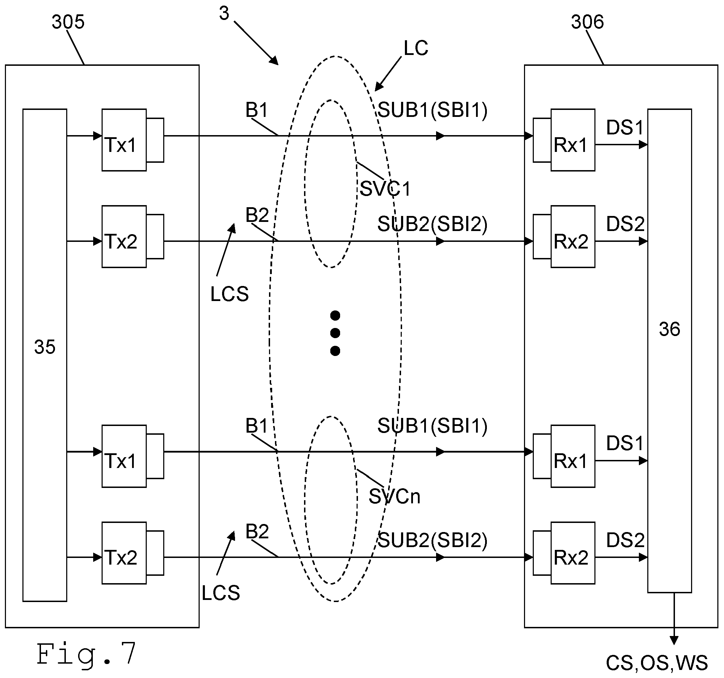

Figure 7 depicts a second exemplary embodiment of a sensor 3 according to the present invention. The sensor of Figure 7 is a light curtain sensor that provides a plurality of surveillance channels SVC1-SVCn (n>1). Each of the surveillance channels SVC1-SVCn comprises a first and a second sub-channel SUB1 and SUB2. Each of the surveillance channels SVC1-SVCn may be identical with the surveillance channel SVC explained above in connection with Figure 1.

The first sub-channel SUB1 of each surveillance channel SVC1-SVCn is formed by a first radiation emitter Tx1 and an individually assigned first detector Rx1.

The second sub-channel SUB2 of each surveillance channel SVC1-SVCn is formed by a second radiation emitter Tx2 and an individually assigned second detector Rx2.

An emitter control unit 35 is configured to control the radiation emitters Tx1 and Tx2 such that each first radiation emitter Tx1 inputs a first stream SBI1 of information into its allocated sub-channel SUB1 and each second radiation emitter Tx2 inputs a second stream SBI2 of information into its allocated sub-channel SUB2. The first stream SBI1 of each surveillance channel is inverse to the second stream SBI2 of the same surveillance channel SVC1-SVCn.

An evaluation unit 36 is configured to evaluate the detection signals DS1 and DS2 of the first and second detectors Rx1 and Rx2 of each of the surveillance channels SVC1-SVCn.

The evaluation unit 36 generates a warning signal WS if the detection signal DS1 of the first detector Rx1 of at least one of the surveillance channels SVC1-SVCn and the detection signal DS2 of the corresponding second detector Rx2 of the same surveillance channel SVC1-SVCn are not inverse or not sufficiently inverse according to a predefined deviation limit. The warning signal WS may indicate which of the surveillance channels SVC1-SVCn is affected (disturbed). The predefined deviation limit may for instance require that the percentage of received pairs of information (e.g. bits) that are not inverse (relatively with respect to one another) must be lower than a given maximum limit (e.g. 1%). Alternatively or additionally, the predefined deviation limit may require that the percentage of received pairs of information (e.g. bits) that are inverse must exceed a given minimum limit (e.g. 99%).

The evaluation unit 36 generates a clearance signal CS if all of the free-beam surveillance channels SVC1-SVCn are both uninterrupted and undisturbed. The surveillance channels SVC1-SVCn may be deemed uninterrupted if all detectors Rx1 and Rx2 receive radiation and generate detection signals that have a sufficient signal strength (e.g. minimal amplitude). The surveillance channels SVC1-SVCn may be deemed undisturbed if their detections signals DS1 and DS2 and their streams SBI1 and SBI2 of information contained therein are inverse or at least sufficiently inverse according to said predefined deviation limit.

The evaluation unit 36 generates an object detection signal OS if at least one of the sub-channels of at least one of the free-beam surveillance channels SVC1-SVCn is interrupted. The sub-channels may be deemed interrupted if their allocated detectors do not generate a sufficient detection signal, e.g. do not provide a detection signal having a required minimum amplitude. The warning signal WS may indicate which of the surveillance channels SVC1-SVCn is interrupted.

Each of the surveillance channels SVC1-SVCn preferably defines a surveillance segment or light curtain segment LCS of a light curtain LC generated by the light curtain sensor 3 during operation.

The surveillance channels SVC1-SVCn may transmit the same streams SBI1 and SBI2 of information. Alternatively, the streams SBI1 and SBI2 of information may differ. Preferably, adjacent surveillance channels transmit different streams SBI1 and SBI2 of information.

The surveillance channels SVC1-SVCn may use radiation of the same wavelength. Alternatively, the surveillance channels SVC1-SVCn may use different wavelengths. Preferably, adjacent surveillance channels use different wavelengths.

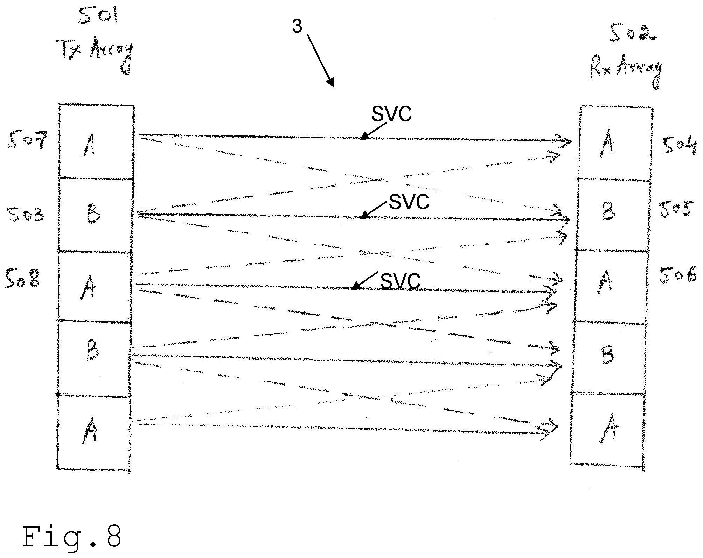

When using multiple surveillance channels SVC in close proximity to one another, the adjacent surveillance channels preferably differ with respect to at least one characteristic. In the exemplary embodiment of Figure 8, a sensor 3 provides at least two different types of surveillance channels labeled A and B. Both types may have identical hardware but may differ for example with respect to the codes assigned to them, with type A using one code and type B using another code.

As depicted in an exemplary fashion in Figure 8, the B-type receiver unit 505 will receive a signal from a B-type transmitter unit 503. But due to close proximity, it is possible that it can also receive signals from A-type transmitter units 507 and 508. The interference from other B-type transmitter units can be ignored due to the distance. For this scenario, we can use Pseudo-Noise (PN) sequences, such as Gold codes, ML sequences, Kassami codes etc. One drawback to using these codes are that the code length, N, should be increased to achieve a reasonable autocorrelation and cross-correlation response. For a small N the sidelobes of the autocorrelation function are too high and as a result it will not be able to suppress interference adequately. For a larger N, the problem is more of processing power and bandwidth as we have to send/receive N chips/bits in a specific time, which based on the application, can be as low as 10s of microseconds. This can increase the cost of the sensor substantially.

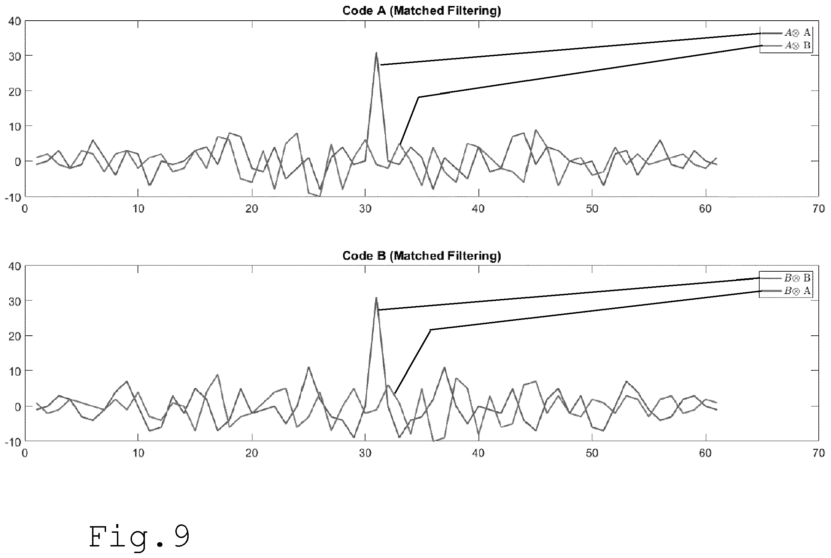

Figure 9 shows the correlation of two such orthogonal codes A and B. The symbol $A \otimes B$ represent cross-correlation (e. g. as described in the publication "Code inverse filtering for complete side-lobe removal in phase coded pulse compression systems" (C. Daniels and V. Gregers-Hansen, IEEE International Radar Conference, 2005., Arlington, VA, 2005, pp. 256-261, doi: 10.1109/RADAR.2005.1435830) given by the following equation:

$$A \otimes B := R(k) = \sum_{x=-\infty}^{\infty} A(x-k)B(x) \qquad (3)$$

To reduce interference, the following set of conditions need to be satisfied:

$$A \otimes B = 0, \quad k \in (-\infty, \infty),$$

$$A \otimes A = N, \quad k \in (0)$$

$$A \otimes A = 0, \quad k \notin (0)$$

$$B \otimes B = N, \quad k \in (0)$$

$$B \otimes B = 0, \quad k \notin (0)$$

To achieve better side-lobe performance of cross-correlation function for a small or reasonable N, we can use a mismatched filter obtained through solving the following optimization problem.

$$\min_{\hat{x}} \quad \|H\hat{x} - b\|_2 \qquad (4)$$

where, H is the convolution matrix containing delayed version of x, b is the desired response; it is zeros at all the delays except zero delay, hence ensuring that the autocorrelation function is close to ideal thumbtack function. $\hat{x}$ is the mismatched counterpart of x having length M > N.

For a two-type (A-type and B-type) sensor 3 or a two-type grid system as depicted in Figure 8, we solve the following set of optimization problems simultaneously to obtain the mismatched pairs {x, $\hat{x}$} and {y, $\hat{y}$}:

$$\min_{\hat{x}} \quad \|H\hat{x} - b_1\|_2 \qquad (5)$$

$$\min_{\hat{y}} \quad \|H\hat{y} - b_2\|_2 \qquad (6)$$

$$\min_{\hat{y}} \quad \|H_2\hat{y} - b_1\|_2 \qquad (7)$$

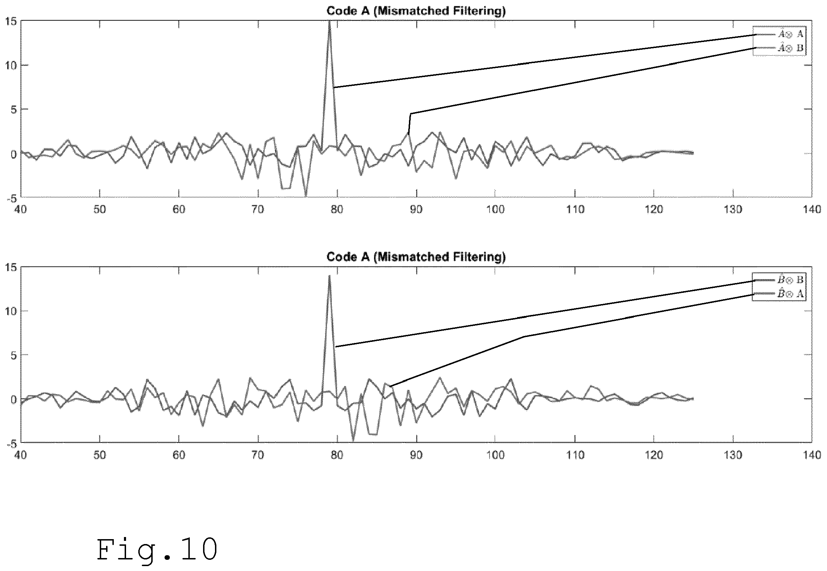

The resultant vectors $\hat{x}$ and $\hat{y}$ will be orthogonal to y and x respectively.
The results are shown in Figure 10. There is some loss of SNR, but the peak to side-lobe ratio will ensure that there is minimal interference from the cross code. The above described concept can be easily extended to more than two sensors. Although it will be required for a large number of codes to increase N as well.

The various embodiments and aspects of embodiments of the invention disclosed herein are to be understood not only in the order and context specifically described in this specification, but to include any order and any combination thereof. Whenever the context requires, all words used in the singular number shall be deemed to include the plural and vice versa. Whenever the context requires, all options that are listed with the word "and" shall be deemed to include the word "or" and vice versa, and any combination thereof.

In the drawings and specification, there have been disclosed a plurality of embodiments of the present invention. The applicant would like to emphasize that each feature of each embodiment may be combined with or added to any other of the embodiments in order to modify the respective embodiment and create additional embodiments. These additional embodiments form a part of the present disclosure and, therefore, the applicant may file further patent claims regarding these additional embodiments at a later stage of the prosecution. Further, the applicant would like to emphasize that each feature of each of the following dependent claims may be combined with any of the present independent claims as well as with any other (one ore more) of the present dependent claims (in accordance with the present claim structure). J Therefore, the applicant may direct further patent claims towards other claim combinations at a later stage of the prosecution.

## Claims

1. Sensor (3) providing at least one surveillance channel (SVC) that comprises a first and a second sub-channel (SUB1, SUB2),

   - wherein the first sub-channel (SUB1) is formed by a first radiation emitter (Tx1) and an individually assigned first detector (Rx1),
   - wherein the second sub-channel (SUB2) is formed by a second radiation emitter (Tx2) and an individually assigned second detector (Rx2), and
   - wherein an emitter control unit (35) is configured to control the radiation emitters such that the first radiation emitter (Tx1) inputs a first stream (SBI1) of information into its allocated sub-channel (SUB1) and the second radiation emitter (Tx2) inputs a second stream (SBI2) of information into its allocated sub-channel (SUB2), wherein an evaluation unit (36) is configured to generate an object detection signal (OS) if at least one of said first and second streams is interrupted,
   - wherein the first stream (SBI1) is logically inverse to the second stream (SBI2) such that the sub-channels convey logically opposite information, and **characterized in that** the evaluation unit (36) is configured to evaluate detection signals of the first and second detector (Rx1, Rx2) and generate a warning signal (WS) if the detection signal of the first detector (Rx1) is not logically inverse with respect to the detection signal of the second detector (Rx2).

2. Sensor (3) of claim 1,
   wherein the evaluation unit (36) generates a clearance signal (CS) if

   - the first detector (Rx1) receives the first stream (SBI1) of information,
   - the second detector (Rx2) receives the second stream (SBI2) of information, and
   - the detected first stream (SBI1) and the detected second stream (SBI2) are logically inverse.

3. Sensor (3) of any of the preceding claims,

   - wherein the sensor (3) provides a plurality of surveillance channels (SVC),
   - wherein each of said surveillance channels (SVC) comprises a first and a second sub-channel (SUB1, SUB2),
   - wherein the first sub-channel (SUB1) of each surveillance channel (SVC) is formed by a first radiation emitter (Tx1) and an individually assigned first detector (Rx1),
   - wherein the second sub-channel (SUB2) of each surveillance channel (SVC) is formed by a second radiation emitter (Tx2) and an individually assigned second detector (Rx2),
   - wherein the emitter control unit (35) is configured to control the radiation emitters such that each first radiation emitter (Tx1) inputs a first stream (SBI1) of information into its allocated sub-channel (SUB1) and each second radiation emitter (Tx2) inputs a second stream (SBI2) of information into its allocated sub-channel (SUB1), wherein the first stream (SBI1) of each surveillance channel (SVC) is inverse to the second stream (SBI2) of the same surveillance channel (SVC), and

- wherein the evaluation unit (36) is configured to evaluate the detection signals of the first and second detector (Rx1, Rx2) of each of the surveillance channels (SVC) and generate a warning signal (WS) if the detection signal of the first detector (Rx1) of at least one of the surveillance channels (SVC) and the detection signal of the corresponding second detector (Rx2) of the same surveillance channel (SVC) are not logically inverse.

4. Sensor (3) of claim 3,
   wherein the sensor (3) is a light curtain sensor (3).

5. Sensor (3) of any of the preceding claims,
   wherein each of said surveillance channels (SVC) defines a surveillance segment of a light curtain generated by the light curtain sensor (3) during operation.

6. Sensor (3) of any of the preceding claims,
   wherein the evaluation unit (36) generates a clearance signal (CS) if the first and second detector (Rx1, Rx2) of all surveillance channels (SVC) detect pairwise logically inverse streams.

7. Sensor (3) of any of the preceding claims,
   wherein the evaluation unit (36) generates an object detection signal (OS) if at least one stream (SBI1) of at least one of said surveillance channels (SVC) is interrupted.

8. Sensor (3) of any of the preceding claims,

   - wherein the radiation generated by the first radiation emitter (Tx1) of each surveillance channel (SVC) has a first polarization,
   - wherein the radiation generated by the second radiation emitter (Tx2) of each surveillance channel (SVC) has a second polarization, and
   - wherein the first polarization is angled, for instance vertically oriented, with respect to the second polarization, the differently oriented polarizations allowing the separation of the sub-channels (SUB1, SUB2) at each surveillance channel's (SVC) end.

9. Sensor (3) of any of the preceding claims,
   wherein the emitter control unit (35) is configured to control the radiation emitters such that the first and the second sub-channel (SUB1, SUB2) convey pairwise orthogonal codes, the orthogonal codes allowing the separation of the sub-channels at each surveillance channel's (SVC) end.

10. Sensor (3) of any of the preceding claims,

    - wherein the radiation generated by the first radiation emitter (Tx1) of each surveillance channel (SVC) has a first wavelength or first wavelength range,
    - wherein the radiation generated by the second radiation emitter (Tx2) of each surveillance channel (SVC) has a second wavelength or second wavelength range, and
    - wherein the first wavelength or first wavelength range differs from the second wavelength or second wavelength range, the different wavelengths or wavelength ranges allowing the separation of the sub-channels at each surveillance channel's (SVC) end.

11. Method of surveiling an area by providing at least one surveillance channel (SVC),
    the method including the steps of

    - providing a first and a second sub-channel (SUB1, SUB2) for each surveillance channel (SVC),
    - wherein the first sub-channel (SUB1) is formed by a first radiation emitter (Tx1) and an individually assigned first detector (Rx1),
    - wherein the second sub-channel (SUB2) is formed by a second radiation emitter (Tx2) and an individually assigned second detector (Rx2), and
    - controlling the radiation emitters such that the first radiation emitter (Tx1) inputs a first stream (SBI1) of information into its allocated sub-channel (SUB1) and the second radiation emitter (Tx2) inputs a second stream (SBI2) of information into its allocated sub-channel (SUB2), wherein the first stream (SBI1) is logically inverse to the second stream (SBI2) and the sub-channels convey logically opposite information,
    - wherein an object detection signal (OS) is generated if at least one stream of at least one of said surveillance channels (SVC) is interrupted, **characterized in that** detection signals of the first and second detector are evaluated and a warning signal (WS) is generated if the detection signal of the first detector (Rx1) is not logically inverse with respect to the detection signal of the second detector (Rx2).

12. Method of claim 11,
   wherein a light curtain is generated by providing a plurality of surveillance channels (SVC).

13. Method of any of the preceding claims 11-12
   wherein a clearance signal (CS) is generated if the first and second detector of all surveillance channels (SVC) detect pairwise logically inverse streams.

**Patentansprüche**

1. Sensor (3), der mindestens einen Überwachungskanal (SVC) bereitstellt, der einen ersten und einen zweiten Unterkanal (SUB1, SUB2) umfasst,

   - wobei der erste Unterkanal (SUB1) durch einen ersten Strahlungssender (Tx1) und einen einzeln zugewiesenen ersten Detektor (Rx1) gebildet ist,
   - der zweite Unterkanal (SUB2) durch einen zweiten Strahlungssender (Tx2) und einen einzeln zugewiesenen zweiten Detektor (Rx2) gebildet ist,
   - eine Sendersteuereinheit (35) konfiguriert ist, die Strahlungssender derart zu steuern, dass der erste Strahlungssender (Tx1) einen ersten Strom (SBI1) von Informationen in seinen zugewiesenen Unterkanal (SUB1) eingibt und der zweite Strahlungssender (Tx2) einen zweiten Strom (SBI2) von Informationen in seinen zugewiesenen Unterkanal (SUB2) eingibt,
   - eine Bewertungseinheit (36) konfiguriert ist, ein Objektdetektionssignal (OS) zu erzeugen, falls der erste und/oder der zweite Strom unterbrochen sind, und
   - der erste Strom (SBI1) zum zweiten Strom (SBI2) logisch invers ist, derart, dass die Unterkanäle logisch entgegengesetzte Informationen transportieren, **dadurch gekennzeichnet, dass** die Bewertungseinheit (36) konfiguriert ist, Detektionssignale des ersten und des zweiten Detektors (Rx1, Rx2) zu bewerten und ein Warnsignal (WS) zu erzeugen, falls das Detektionssignal des ersten Detektors (Rx1) in Bezug auf das Detektionssignal des zweiten Detektors (Rx2) nicht logisch invers ist.

2. Sensor (3) nach Anspruch 1,
   wobei die Bewertungseinheit (36) ein Freigabesignal (CS) erzeugt, falls

   - der erste Detektor (Rx1) den ersten Strom (SBI1) von Informationen empfängt,
   - der zweite Detektor (Rx2) den zweiten Strom (SBI2) von Informationen empfängt und
   - der detektierte erste Strom (SBI1) und der detektierte zweite Strom (SBI2) logisch invers sind.

3. Sensor (3) nach einem der vorhergehenden Ansprüche,

   - wobei der Sensor (3) mehrere Überwachungskanäle (SVC) bereitstellt,
   - jeder der Überwachungskanäle (SVC) einen ersten und einen zweiten Unterkanal (SUB1, SUB2) umfasst,
   - der erste Unterkanal (SUB1) jedes Überwachungskanals (SVC) durch einen ersten Strahlungssender (Tx1) und einen einzeln zugewiesenen ersten Detektor (Rx1) gebildet ist,
   - der zweite Unterkanal (SUB2) jedes Überwachungskanals (SVC) durch einen zweiten Strahlungssender (Tx2) und einen einzeln zugewiesenen zweiten Detektor (Rx2) gebildet ist,
   - die Sendersteuereinheit (35) konfiguriert ist, die Strahlungssender derart zu steuern, dass jeder erste Strahlungssender (Tx1) einen ersten Strom (SBI1) von Informationen in seinen zugewiesenen Unterkanal (SUB1) eingibt und jeder zweite Strahlungssender (Tx2) einen zweiten Strom (SBI2) von Informationen in seinen zugewiesenen Unterkanal (SUB1) eingibt, wobei der erste Strom (SBI1) jedes Überwachungskanals (SVC) zum zweiten Strom (SBI2) desselben Überwachungskanals (SVC) invers ist, und
   - die Bewertungseinheit (36) konfiguriert ist, die Detektionssignale des ersten und des zweiten Detektors (Rx1, Rx2) jedes der Überwachungskanäle (SVC) zu bewerten und ein Warnsignal (WS) zu erzeugen, falls das Detektionssignal des ersten Detektors (Rx1) mindestens eines der Überwachungskanäle (SVC) und das Detektionssignal des entsprechenden zweiten Detektors (Rx2) desselben Überwachungskanals (SVC) nicht logisch invers sind.

**4.** Sensor (3) nach Anspruch 3,
wobei der Sensor (3) ein Lichtvorhangsensor (3) ist.

**5.** Sensor (3) nach einem der vorhergehenden Ansprüche, wobei jeder der Überwachungskanäle (SVC) ein Überwachungssegment eines Lichtvorhangs definiert, der durch den Lichtvorhangsensor (3) während des Betriebs erzeugt wird.

**6.** Sensor (3) nach einem der vorhergehenden Ansprüche, wobei die Bewertungseinheit (36) ein Freigabesignal (CS) erzeugt, falls der erste und der zweite Detektor (Rx1, Rx2) aller Überwachungskanäle (SVC) paarweise logisch inverse Ströme detektieren.

**7.** Sensor (3) nach einem der vorhergehenden Ansprüche, wobei die Bewertungseinheit (36) ein Objektdetektionssignal (OS) erzeugt, falls mindestens ein Strom (SBI1) mindestens eines der Überwachungskanäle (SVC) unterbrochen ist.

**8.** Sensor (3) nach einem der vorhergehenden Ansprüche,

- wobei die Strahlung, die durch den ersten Strahlungssender (Tx1) jedes Überwachungskanals (SVC) erzeugt wird, eine erste Polarisation aufweist,
- die Strahlung, die durch den zweiten Strahlungssender (Tx2) jedes Überwachungskanals (SVC) erzeugt wird, eine zweite Polarisation aufweist und
- die erste Polarisation in Bezug auf die zweite Polarisation angewinkelt, zum Beispiel vertikal orientiert, ist, wobei die verschieden orientierten Polarisationen die Trennung der Unterkanäle (SUB1, SUB2) beim Ende jedes Überwachungskanals (SVC) ermöglichen.

**9.** Sensor (3) nach einem der vorhergehenden Ansprüche, wobei die Sendersteuereinheit (35) konfiguriert ist, die Strahlungssender derart zu steuern, dass der erste und der zweite Unterkanal (SUB1, SUB2) paarweise orthogonale Codes transportieren, wobei die orthogonalen Codes die Trennung der Unterkanäle beim Ende jedes Überwachungskanals (SVC) ermöglichen.

**10.** Sensor (3) nach einem der vorhergehenden Ansprüche,

- wobei die Strahlung, die durch den ersten Strahlungssender (Tx1) jedes Überwachungskanals (SVC) erzeugt wird, eine erste Wellenlänge oder einen ersten Bereich von Wellenlängen aufweist,
- die Strahlung, die durch den zweiten Strahlungssender (Tx2) jedes Überwachungskanals (SVC) erzeugt wird, eine zweite Wellenlänge oder einen zweiten Bereich von Wellenlängen aufweist und
- die erste Wellenlänge oder der erste Bereich von Wellenlängen sich von der zweiten Wellenlänge oder dem zweiten Bereich von Wellenlängen unterscheidet, wobei die verschiedenen Wellenlängen oder Bereiche von Wellenlängen die Trennung der Unterkanäle beim Ende jedes Überwachungskanals (SVC) ermöglichen.

**11.** Verfahren zum Überwachen eines Bereichs durch Bereitstellen mindestens eines Überwachungskanals (SVC), wobei
das Verfahren die folgenden Schritte umfasst:

- Bereitstellen eines ersten und eines zweiten Unterkanals (SUB1, SUB2) für jeden Überwachungskanal (SVC),
- wobei der erste Unterkanal (SUB1) durch einen ersten Strahlungssender (Tx1) und einen einzeln zugewiesenen ersten Detektor (Rx1) gebildet ist und
- der zweite Unterkanal (SUB2) durch einen zweiten Strahlungssender (Tx2) und einen einzeln zugewiesenen zweiten Detektor (Rx2) gebildet ist, und
- Steuern der Strahlungssender derart, dass der erste Strahlungssender (Tx1) einen ersten Strom (SBI1) von Informationen in seinen zugewiesenen Unterkanal (SUB1) eingibt und der zweite Strahlungssender (Tx2) einen zweiten Strom (SBI2) von Informationen in seinen zugewiesenen Unterkanal (SUB2) eingibt,
- wobei der erste Strom (SBI1) zum zweiten Strom (SBI2) logisch invers ist und die Unterkanäle logisch entgegengesetzte Informationen transportieren und
- ein Objektdetektionssignal (OS) erzeugt wird, falls mindestens ein Strom mindestens eines der Überwachungskanäle (SVC) unterbrochen ist, **dadurch gekennzeichnet, dass** Detektionssignale des ersten und des zweiten Detektors bewertet werden und ein Warnsignal (WS) erzeugt wird, falls das Detektionssignal des ersten Detektors (Rx1) in Bezug auf das Detektionssignal des zweiten Detektors (Rx2) nicht logisch invers ist.

**12.** Verfahren nach Anspruch 11,
wobei durch Bereitstellen von mehreren Überwachungskanälen (SVC) ein Lichtvorhang erzeugt wird.

**13.** Verfahren nach einem der vorhergehenden Ansprüche 11-12,
wobei ein Freigabesignal (CS) erzeugt wird, falls der erste und der zweite Detektor aller Überwachungskanäle (SVC) paarweise logisch inverse Ströme detektieren.


**Revendications**

**1.** Capteur (3) mettant en place au moins un canal de surveillance (SVC) qui comporte un premier et un second sous-canal (SUB1, SUB2),

- le premier sous-canal (SUB1) étant formé par un premier émetteur (Tx1) de rayonnement et un premier détecteur (Rx1) affecté individuellement,
- le second sous-canal (SUB2) étant formé par un second émetteur (Tx2) de rayonnement et un second détecteur (Rx2) affecté individuellement, et
- une unité (35) de commande d'émetteurs étant configurée pour commander les émetteurs de rayonnement de telle façon que le premier émetteur (Tx1) de rayonnement introduise un premier flux (SBI1) d'informations dans le sous-canal (SUB1) qui lui est attribué et que le second émetteur (Tx2) de rayonnement introduise un second flux (SBI2) d'informations dans le sous-canal (SUB2) qui lui est attribué,
une unité (36) d'évaluation étant configurée pour générer un signal de détection d'objet (OS) si au moins un desdits premier et second flux est interrompu,
- le premier flux (SBI1) étant logiquement inverse du second flux (SBI2) de telle façon que les sous-canaux acheminent des informations logiquement opposées, et **caractérisé en ce que** l'unité (36) d'évaluation est configurée pour évaluer des signaux de détection du premier et du second détecteur (Rx1, Rx2) et générer un signal d'avertissement (WS) si le signal de détection du premier détecteur (Rx1) n'est pas logiquement inverse par rapport au signal de détection du second détecteur (Rx2).

**2.** Capteur (3) selon la revendication 1,
l'unité (36) d'évaluation générant un signal de dégagement (CS) si

- le premier détecteur (Rx1) reçoit le premier flux (SBI1) d'informations,
- le second détecteur (Rx2) reçoit le second flux (SBI2) d'informations, et
- le premier flux détecté (SBI1) et le second flux détecté (SBI2) sont logiquement inverses.

**3.** Capteur (3) selon l'une quelconque des revendications précédentes,

- le capteur (3) mettant en place une pluralité de canaux de surveillance (SVC),
- chacun desdits canaux de surveillance (SVC) comportant un premier et un second sous-canal (SUB1, SUB2),
- le premier sous-canal (SUB1) de chaque canal de surveillance (SVC) étant formé par un premier émetteur (Tx1) de rayonnement et un premier détecteur (Rx1) affecté individuellement,
- le second sous-canal (SUB2) de chaque canal de surveillance (SVC) étant formé par un second émetteur (Tx2) de rayonnement et un second détecteur (Rx2) affecté individuellement,
- l'unité (35) de commande d'émetteurs étant configurée pour commander les émetteurs de rayonnement de telle façon que chaque premier émetteur (Tx1) de rayonnement introduise un premier flux (SBI1) d'informations dans le sous-canal (SUB1) qui lui est attribué et que chaque second émetteur (Tx2) de rayonnement introduise un second flux (SBI2) d'informations dans le sous-canal (SUB1) qui lui est attribué, le premier flux (SBI1) de chaque canal de surveillance (SVC) étant inverse du second flux (SBI2) du même canal de surveillance (SVC), et
- l'unité (36) d'évaluation étant configurée pour évaluer les signaux de détection du premier et du second détecteur (Rx1, Rx2) de chacun des canaux de surveillance (SVC) et générer un signal d'avertissement (WS) si le signal de détection du premier détecteur (Rx1) d'au moins un des canaux de surveillance (SVC) et le signal de détection du second détecteur (Rx2) correspondant du même canal de surveillance (SVC) ne sont pas logiquement inverses.

**4.** Capteur (3) selon la revendication 3,
le capteur (3) étant un capteur (3) à rideau de lumière.

**5.** Capteur (3) selon l'une quelconque des revendications précédentes,
chacun desdits canaux de surveillance (SVC) définissant un segment de surveillance d'un rideau de lumière généré par le capteur (3) à rideau de lumière en cours de fonctionnement.

**6.** Capteur (3) selon l'une quelconque des revendications précédentes,
l'unité (36) d'évaluation générant un signal de dégagement (CS) si le premier et le second détecteur (Rx1, Rx2) de tous les canaux de surveillance (SVC) détectent des flux logiquement inverses deux à deux.

**7.** Capteur (3) selon l'une quelconque des revendications précédentes,
l'unité (36) d'évaluation générant un signal de détection d'objet (OS) si au moins un flux (SBI1) d'au moins un desdits canaux de surveillance (SVC) est interrompu.

**8.** Capteur (3) selon l'une quelconque des revendications précédentes,

- le rayonnement généré par le premier émetteur (Tx1) de rayonnement de chaque canal de surveillance (SVC) présentant une première polarisation,
- le rayonnement généré par le second émetteur (Tx2) de rayonnement de chaque canal de surveillance (SVC) présentant une seconde polarisation, et
- la première polarisation formant un angle, par exemple étant orientée verticalement, par rapport à la seconde polarisation, les polarisations orientées différemment permettant la séparation des sous-canaux (SUB1, SUB2) à l'extrémité de chaque canal de surveillance (SVC).

**9.** Capteur (3) selon l'une quelconque des revendications précédentes,
l'unité (35) de commande d'émetteurs étant configurée pour commander les émetteurs de rayonnement de telle façon que le premier et le second sous-canal (SUB1, SUB2) acheminent des codes orthogonaux deux à deux, les codes orthogonaux permettant la séparation des sous-canaux à l'extrémité de chaque canal de surveillance (SVC).

**10.** Capteur (3) selon l'une quelconque des revendications précédentes,

- le rayonnement généré par le premier émetteur (Tx1) de rayonnement de chaque canal de surveillance (SVC) présentant une première longueur d'onde ou une première plage de longueurs d'onde,
- le rayonnement généré par le second émetteur (Tx2) de rayonnement de chaque canal de surveillance (SVC) présentant une seconde longueur d'onde ou une seconde plage de longueurs d'onde, et
- la première longueur d'onde ou la première plage de longueurs d'onde différant de la seconde longueur d'onde ou de la seconde plage de longueurs d'onde, les longueurs d'onde ou les plages de longueurs d'onde différentes permettant la séparation des sous-canaux à l'extrémité de chaque canal de surveillance (SVC).

**11.** Procédé de surveillance d'une zone par la mise en place d'au moins un canal de surveillance (SVC),
le procédé comprenant les étapes consistant à

- mettre en place un premier et un second sous-canal (SUB1, SUB2) pour chaque canal de surveillance (SVC),
- le premier sous-canal (SUB1) étant formé par un premier émetteur (Tx1) de rayonnement et un premier détecteur (Rx1) affecté individuellement,
- le second sous-canal (SUB2) étant formé par un second émetteur (Tx2) de rayonnement et un second détecteur (Rx2) affecté individuellement, et
- commander les émetteurs de rayonnement de telle façon que le premier émetteur (Tx1) de rayonnement introduise un premier flux (SBI1) d'informations dans le sous-canal (SUB1) qui lui est attribué et que le second émetteur (Tx2) de rayonnement introduise un second flux (SBI2) d'informations dans le sous-canal (SUB2) qui lui est attribué,
le premier flux (SBI1) étant logiquement inverse du second flux (SBI2) et les sous-canaux acheminant des informations logiquement opposées,
- un signal de détection d'objet (OS) étant généré si au moins un flux d'au moins un desdits canaux de surveillance (SVC) est interrompu, **caractérisé en ce que** des signaux de détection du premier et du second détecteur sont évalués et **en ce qu'**un signal d'avertissement (WS) est généré si le signal de détection du premier détecteur (Rx1) n'est pas logiquement inverse par rapport au signal de détection du second détecteur (Rx2) .

**12.** Procédé selon la revendication 11,
un rideau de lumière étant généré en mettant en place une pluralité de canaux de surveillance (SVC).

13. Procédé selon l'une quelconque des revendications 11 à 12 qui précèdent,
un signal de dégagement (CS) étant généré si le premier et le second détecteur de tous les canaux de surveillance (SVC) détectent des flux logiquement inverses deux à deux.

Fig.1

EP 4 166 993 B1

Fig.2

Fig.3

EP 4 166 993 B1

Fig.4

Fig.5

Fig. 6

Fig.7

501
Tx Array

502
Rx Array

3

507 | A
503 | B
508 | A
| B
| A

SVC
SVC
SVC

A | 504
B | 505
A | 506
B
A

Fig.8

EP 4 166 993 B1

Fig.9

Fig.10

**EP 4 166 993 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 203877712 U
- EP 2012144 B1
- US 4650990 A
- US 20210011166 A1

**Non-patent literature cited in the description**

- **C. DANIELS ; V. GREGERS-HANSEN.** Code inverse filtering for complete side-lobe removal in phase coded pulse compression systems. *IEEE International Radar Conference, 2005., Arlington, VA,* 2005, 256-261